# EUROPEAN PATENT SPECIFICATION

(11) **EP 0 985 554 B1**
(45) Date of publication and mention of the grant of the patent: **12.11.2003**
(21) Application number: 99117706.4
(22) Date of filing: 08.09.1999
(51) Int. Cl.: B60C 1/00, B60C 17/08, C08L 15/00

(54) **Runflat tire**
Notlaufreifen
Pneumatique pouvant rouler à plat

(30) Priority: 09.09.1998 US 150086
(43) Date of publication of application: 15.03.2000
(73) Proprietor: THE GOODYEAR TIRE & RUBBER COMPANY, Akron, Ohio 44316-0001 (US)
(72) Inventor: Halasa, Adel Farhan, Bath, Ohio 44333 (US); Hsu, Wen-Liang, Cuyahoga Falls, Ohio 44223 (US); Miner, Jennifer Ann, Stow, Ohio 44224 (US); Burlett, Donald James, Wadsworth, Ohio 44281 (US); Pearson, Charles John, Akron, Ohio 44321 (US); Oare, Thomas Reed, Suffield, Ohio 44260 (US); Magnus, Fredrick Lewis, Mogadore, Ohio 44260 (US); Feng, Yi (NMN), Copley, Ohio 44321 (US)
(74) Representative: Barz, Peter, Dr.

(56) References cited:
- EP-A- 0 509 295
- EP-A- 0 570 715

## Description

### Technical Field

This invention relates to a pneumatic tire that is capable of being used after total loss of air pressure, other than ambient atmospheric pressure. In other words, the tire can be used in an uninflated condition.

### Background of the Invention

Various tire constructions have been suggested for pneumatic runflat tires; that is, tires capable of being used while uninflated (with total loss of air pressure other than ambient atmospheric pressure). A vehicle equipped with such tires can continue to be driven after the tire experiences loss of pneumatic pressure, such as loss of air pressure caused by puncture or valve failure. This is highly desirable since it allows vehicles equipped with such runflat tires to continue in operation until they reach a location where the tire can be safely repaired or replaced.

One approach to manufacturing a pneumatic runflat tire is described in United States Patent 4,111,249 which is entitled "Banded Tire." This approach involves providing a hoop or annular band directly under and approximately as wide as the tread. The hoop in combination with the rest of the tire structure is reported to be capable of supporting the weight of the vehicle while the tire is in an uninflated condition. This banded tire actually tensions the ply cords even while it is in an uninflated state.

Another approach described in European Patent Publication No. 0-475-258A1 is to simply strengthen the tire sidewalls by increasing the cross-sectional thickness thereof. When such tires are operated in the uninflated condition, it places the sidewalls of the tire in compression. Heat buildup can lead to tire failure in such tires due to the large amounts of rubber required to stiffen the sidewall in cases where this approach is taken. This is especially true when the tire is operated for prolonged periods at high speeds in the uninflated condition.

United States Patent 5,368,082 discloses the first commercially accepted runflat pneumatic radial ply tire, the Eagle® GSC-EMT tire introduced by The Goodyear Tire & Rubber Company. This tire was accepted as an equipment option for the 1994 Chevrolet Corvette automobile. United States Patent 5,368,082 teaches the employment of special sidewall inserts to improve stiffness. Approximately 27 Kg additional (six pounds) of weight per tire was required to support an 363 Kg (800-lb) load on this uninflated tire. These runflat tires had a very low aspect ratio. This earlier invention, although superior to prior attempts, still imposed a weight penalty per tire that could be offset by the elimination of a spare tire and the tire jack. This weight penalty was even more problematic when engineers attempted to build higher aspect ratio tires for large luxury touring sedans. The required supported weight for an uninflated luxury car tire approximates 635 Kg (1400 pounds) of load. These taller sidewalled tires having aspect ratios in the 55 percent to 65 percent range or greater means that the working loads were several times that of the earlier 40 percent aspect ratio runflat tires developed for the Corvette automobile. Such loads meant that the sidewalls and overall tire had to be stiffened to the point of compromising ride. Luxury vehicle owners simply will not sacrifice ride quality for runflat capability.

The goal of engineering has been to develop a runflat tire without compromising ride or performance. In sports cars having relatively stiff suspension characteristics, the ability to provide such a runflat tire was comparatively easy as compared to providing such tires for luxury sedans that demand softer ride characteristics. Light truck and sport utility vehicles, although not as sensitive to ride performance, typically utilize tires having a relatively high aspect ratio which makes the requirements for the runflat tire more challenging.

An equally important design consideration in the development of a runflat tire is insuring that the uninflated tire remains seated on the rim. Solutions have been developed employing bead restraining devices as well as special rims to accomplish this requirement. Alternatively, the Eagle GSC-EMT tire employed a new bead configuration enabling the tire to function on standard rims without requiring additional bead restraining devices.

United States Patent 5,427,166 and United States Patent 5,511,599 disclose tires wherein a third ply and a third insert in the sidewall are used to further increase runflat performance over a basic design disclosed in United States Patent 5,368,082. These patents disclose the concept of including additional plies and inserts in a tire sidewall to attain improved runflat performance characteristics.

United States Patent 5,685,927 discloses a runflat tire which provides a higher aspect ratio with the employment of load-supporting bead cores placed directly under the tread belt package of the tire. Runflat tires made utilizing this approach are very promising in load support and ride quality. However, this approach leads to higher rolling resistance which decreases fuel economy even during periods when the tire is used under normal conditions at standard inflation pressure.

United States Patent 5,535,800 discloses the use of elastomeric-covered composite ribs that in combination with a radial ply can provide excellent runflat capability in a wide range of tire applications.

Tin-coupled polymers are known to provide desirable properties, such as improved treadwear and reduced rolling resistance, when used in tire tread rubbers see, e.g., EP-A-570715. Such tin-coupled rubbery polymers are typically made by coupling the rubbery polymer with a tin coupling agent at or near the end of the polymerization used in synthesizing the rubbery polymer. In the coupling process, live polymer chain ends react with the tin coupling agent, thereby coupling the polymer. For instance, up to four live chain ends can react with tin tetrahalides, such as tin tetrachloride, thereby coupling the polymer chains together.

The coupling efficiency of the tin coupling agent is dependant on many factors, such as the quantity of live chain ends available for coupling and the quantity and type of polar modifier, if any, employed in the polymerization. For instance, tin coupling agents are generally not as effective in the presence of polar modifiers. The amount of coupling which is attained is also, of course, highly dependent upon the quantity of tin coupling agent employed.

Each tin tetrahalide molecule is capable of reacting with up to four live polymer chain ends. However, since perfect stoichiometry is difficult to attain, some of the tin halide molecules often react with less than four live polymer chain ends. For instance, if more than a stoichiometric amount of the tin halide coupling agent is employed, then there will be an insufficient quantity of live polymer chain ends to totally react with the tin halide molecules on a four-to-one basis. On the other hand, if less than a stoichiometric amount of the tin halide coupling agent is added, then there will be an excess of live polymer chain ends and some of the live chain ends will not be coupled.

Conventional tin coupling results in the formation of a coupled polymer which is essentially symmetrical. In other words, all of the polymer arms on the coupled polymer are of essentially the same chain length. All of the polymer arms in such conventional tin-coupled polymers are accordingly of essentially the same molecular weight. This results in such conventional tin-coupled polymers having a low polydispersity. For instance, conventional tin-coupled polymers normally having a ratio of weight average molecular weight to number average molecular weight which is within the range of about 1.01 to about 1.1

United States Provisional Patent Application 60/037,929, filed on February 14, 1997, discloses that greatly improved properties for tire rubbers, such as lower hysteresis, can be attained by asymmetrically coupling the rubber. For instance, such asymmetrically coupled polymers can be utilized in making tires having greatly improved rolling resistance without sacrificing other tire properties. These improved properties are due in part to better interaction and compatibility with carbon black. The asymmetrical tin coupling also normally leads to improve the cold flow characteristics of the rubbery polymer. Tin coupling in general also leads to better processability and other beneficial properties.

The asymmetrical tin-coupled rubbery polymers that can be used to improve the performance characteristics of tire tread compounds are comprised of a tin atom having polydiene arms covalently bonded thereto. At least one of the polydiene arms bonded to the tin atom will be a low number molecular weight arm having a number average molecular weight of less than about 40,000. It is also critical for the asymmetrical tin-coupled rubbery polymer to have at least one high molecular weight polydiene arm bonded to the tin atom. This high molecular weight arm will have a number average molecular weight which is at least 80,000. The ratio of the weight average molecular weight to the number average molecular weight of the asymmetrical tin-coupled rubbery polymers of this invention will also be within the range of about 2 to about 2.5.

United States.Provisional Patent Application Serial No. 60/037,929 further reveals a process for preparing asymmetrical tin-coupled rubbery polymers which comprises: (1) continuously polymerizing at least one diene monomer to a conversion of at least about 90 percent, utilizing an anionic initiator to produce a polymer cement containing living polydiene rubber chains, wherein some of the living polydiene rubber chains are low molecular weight polydiene rubber chains having a number average molecular weight of less than about 40,000, and wherein some of the living polydiene rubber chains are high molecular weight polydiene rubber chains having a number average molecular weight of greater than about 80,000; and (2) continuously adding a tin halide to the polymer cement in a separate reaction vessel to produce the asymmetrically tin-coupled rubbery polymer, wherein said asymmetrical tin-coupled rubbery polymer has a polydispersity which is within the range of about 2 to about 2.5.

According to United States Provisional Patent Application Serial No. 60/037,929, the stability of the asymmetrical tin-coupled rubbery polymers can be improved by adding a tertiary chelating amine thereto, subsequent to the time at which the tin-coupled rubbery polymer is coupled. N,N,N',N'-tetramethylethylenediamine (TMEDA) is a representative example of a tertiary chelating amine which is preferred for utilization in stabilizing such asymmetrical tin-coupled rubbery polymers. However, there is a desire to further improve the stability of such asymmetrical tin-coupled rubbery polymers.

### Summary of the Invention

This invention discloses runflat tires that can be built without appreciably increasing weight or rolling resistance.

This invention more specifically discloses a pneumatic tire having at least one insert to provide said pneumatic tire with runflat capability. These tires utilize, as the insert, a composition of matter which is comprised of (1) a cured polydiene rubber that is coupled with a Group IVa metal selected from the group consisting of tin, lead, germanium and silicon, (2) from about 20 phr to about 130 phr of a filler and (3) from 0.1 phr to 5 phr of a fatty acid.

It is normally preferred for the cured polydiene rubber to be coupled with tin. In any case, inserts made utilizing this composition offer higher levels of modulus. This means that the thickness of the insert can be reduced which decreases the level of heat buildup and hysteresis experienced. Thus, the inserts of this invention can be employed in making runflat tires that offer reduced rolling resistance and heat buildup over runflat tires made with conventional inserts.

The weight of runflat tires made utilizing the thinner inserts of this invention is reduced because thinner inserts naturally weigh less. This weight reduction is, of course, an advantage that can lead to better vehicle performance and fuel economy. The utilization of thinner inserts also leads to reduced tire material cost. The higher level of filler loading used in the tire inserts of this invention also leads to reduced cost. However, the higher level of filler loading does not normally lead to increased hysteresis or polymer viscosity. The overall cost of tire production can also be reduced because cure cycle times can be reduced by virtue of the insert being thinner. It should be further noted that the tire inserts of this invention can be successfully employed in a wide variety of alternative carcass constructions.

In one embodiment, a runflat tire is comprised of a generally toroidal-shaped carcass with an outer circumferential tread, two spaced beads, at least one ply extending from bead to bead and sidewalls extending radially from and connecting said tread to said beads; wherein said tread is adapted to be ground-contacting, wherein said sidewalls contain at least one insert radially inward from said ply.

In a further embodiment, a pneumatic radial ply runflat tire is comprised of a tread, two inextensible annular beads, a carcass comprising a radial ply structure having at least one radial ply, a belt structure located between the tread and the radial ply structure and two sidewalls reinforced by one or more inserts, wherein the tire is characterized by: (a) a tread having laterally disposed tread ribs; (b) a sidewall rib disposed near the radially outermost region of each sidewall adapted for contact with a driving surface during runflat operation and free from contact with the driving surface during operation at normal inflation pressure; (c) first decoupling grooves circumferentially disposed between the sidewall rib and the adjacent tread rib; and (d) second decoupling grooves circumferentially disposed between the tread ribs and the adjacent central region of the tread.

In another embodiment, a pneumatic runflat tire is comprised of a toroidally-shaped carcass and an outer, circumferential tread designed to be ground contacting, wherein said carcass is comprised of two spaced-apart inextensible bead portions, two spaced-apart sidewalls each individually extending radially inward from and connecting said tread to said bead portions and at least one cord reinforced ply extending from bead to bead and through the sidewalls; wherein a substantially crescent-shaped rubber insert is juxtapositioned to and axially inward of at least one of said carcass plies in each of said sidewalls of the tire.

### Brief Description of the Drawings

Figure 1 is a fragmentary cross-sectional view of a tire showing its tread and carcass with one ply and one insert axially inward of the ply in the sidewall region of the tire as an embodiment of the invention.
Figure 2 is a fragmentary cross-sectional view of a tire showing its tread and carcass with two plies, a second insert interposed between the plies and a second ply axially outward of the innermost ply in the sidewall region of the tire as an embodiment of the invention.
Figure 3 is a fragmentary cross-sectional view of a tire showing its tread and carcass with three plies, inserts between the plies and another insert axially inward of the innermost ply in the sidewall region of the tire as an embodiment of the invention.

### Definitions

"Axial" and "axially," where used, means directions that are parallel to the axis of rotation of the tire.

"Bead portion" means generally that part of the tire comprising an annular inextensible tensile member such as a multiplicity of annular wires surrounded by an elastomer composition(s) and is associated with holding the tire to the rim being wrapped by ply cords and shaped, with or without other reinforcement elements such as flippers, chippers, apexes or fillers, toe guards and chaffers. The bead core usually refers to the wire beads of the bead portion but sometimes may refer to the bead portion itself.

"Belt Structure" or "Reinforcing Belts," where used, means at least two annular layers or plies of parallel cords, woven or unwoven, underlying the tread, unanchored to the bead and having both left and right cord angles in the range from 17° to 27° with respect to the equatorial plane of the tire.

"Circumferential" may be used in the description to relate to a direction extending along (around) the outer perimeter of the surface of the tire carcass such as, for example, the circumferential tread on the carcass.

"Carcass" means the tire structure apart from the tread but including supporting plies, sidewalls and the beads or bead portions.

"Chafers," where used herein, refers to narrow strips of material placed around the outside of the bead to protect cord plies from the rim and distribute flexing above the rim.

"Cord" means one of the reinforcement strands of which the plies in the tire are comprised.

"Innerliner," where used herein, means the layer or layers of elastomer or other material that form the inside surface of a tubeless tire and that contain the inflating fluid within the tire.

"Ply" means a layer of rubber-coated parallel cords.

"Radial" and "radially" mean directions radially toward or away from the axis of rotation of the tire.

"Radial Ply Tire," if used herein, means a belted or circumferentially-restricted pneumatic tire in which at least one ply has cords which extend from bead to bead are laid at cord angles between 65° and 90° with respect to the equatorial plane of the tire.

"Shoulder," if used herein, means the upper portion of sidewall just below the tread edge.

"Sidewall" means that portion of a tire between the tread and the bead.

### Detailed Description of the Invention

The tire inserts of this invention are comprised of (1) a cured polydiene rubber that is coupled with tin, lead, germanium or silica, (2) a filler and (3) a fatty acid. The tire insert composition will normally contain from about 30 phr (parts by weight per 100 parts of rubber) to about 130 phr of the filler and from 0.1 phr to about 5 phr of the fatty acid. It is typically preferred for the tire insert compound to contain from about 60 phr to about 110 phr of the filler and from about 0.4 phr to about 3 phr of the fatty acid. It is generally more preferred for the tire insert to contain from 70 phr to 100 phr of the filler and from 0.5 phr to 1.5 phr of the fatty acid.

The filler will normally be carbon black, silica or a combination of carbon black and silica. The fatty acid can be virtually any fatty acid that is soluble in the coupled rubber. In most cases, it is preferred to use a mixture of fatty acids for economic reasons. For instance, such a preferred mixture of fatty acids includes 40 percent to 50 percent oleic acid, 30 percent to 40 percent linoleic acid, 2 percent to 6 percent stearic acid, 2 percent to 6 percent rosin acids and 10 percent to 20 percent other fatty acids. The fatty acids that can be used will normally be of the formula R-COOH, wherein R represents an alkyl group or an unsaturated hydrocarbon containing from about 16 to about 20 carbon atoms. In addition to the coupled polydiene rubber, the insert can be further comprised of natural rubber. In some cases, it is advantageous to utilize a blend that contains from about 10 phr to about 70 phr of natural rubber, based upon the total amount of rubber in the blend.

The coupled polydiene rubber can be made by anionic polymerization wherein the polymerization is terminated by the addition of a Group VIa metal coupling agent, such as a tin tetrahalide. The anionic polymerization is carried out for a length of time sufficient to permit substantially complete polymerization of monomers. In other words, the polymerization is normally carried out until high conversions are attained. Then, the coupling agent is added to couple the living rubbery polymer which, of course, terminates the polymerization.

The coupling agent will typically be Group IVa metal halide, such as a tin halide, a lead halide, a germanium halide or a silicon halide. The halogen in the coupling agent will typically be fluorine, chlorine, bromine or iodine. In most cases, the halogen will be selected from the group consisting of fluorine, chlorine and bromine with chlorine being preferred. Tin coupling agents, such as tin tetrachloride, tin tetrabromide, tin tetrafloride and tin tetraiodide are normally preferred. The coupling agent will normally be a tetrahalide. However, trihalides or dihalides can also be used. In cases where tin dihalides are utilized, a linear polymer rather than a star polymer results. To induce a higher level of branching, tin tetrahalides are normally preferred.

Broadly, and exemplarily, a range of about 0.01 to 4.5 milliequivalents of the coupling agent is employed per 100 grams of the rubbery monomer. It is normally preferred to utilize about 0.01 to about 1.5 milliequivalents of the coupling agent per 100 grams of monomer to obtain the desired Mooney viscosity. The larger quantities tend to result in production of polymers containing terminally reactive groups or insufficient coupling. One equivalent of tin coupling agent per equivalent of lithium is considered an optimum amount for maximum branching. For instance, if a tin tetrahalide is used as the coupling agent, one mole of the tin tetrahalide would be utilized per four moles of live lithium ends. In cases where a tin trihalide is used as the coupling agent, one mole of the tin trihalide will optimally be utilized for every three moles of live lithium ends. The tin coupling agent can be added to a polymer cement containing the living rubbery polymer in a hydrocarbon solution, e.g., in cyclohexane, with suitable mixing for distribution and reaction.

The coupled rubbery polymer utilized in the tire insert compositions of this invention can optionally be asymmetrical coupled. A technique for preparing asymmetrically tin-coupled rubbery polymers is disclosed in United States Patent Application Serial No. 09/008,716, filed on January 19, 1998 (GB 9803145.3) the teachings of which are incorporated herein by reference in their entirety. In this process, asymmetrical tin-coupled rubbery polymer having improved stability are made by a process that comprises: (1) continuously polymerizing in a first reactor at least one diene monomer to a conversion of at least about 90 percent, utilizing an anionic initiator to produce a polymer cement containing living polydiene rubber chains; (2) continuously feeding the polymer cement produced in the first reactor into a second reactor; (3) adding a tin halide to the polymer cement in a second reactor under conditions of agitation to produce a polymer cement having the tin halide homogeneously dispersed therein, wherein the residence time in the second reactor is within the range of about 15 minutes to about 4 hours; (4) continuously feeding the polymer cement having the tin halide homogeneously dispersed therein into a plug flow reactor having a residence time of about 15 minutes to about 1 hour to produce a polymer cement of the asymmetrically tin-coupled rubbery polymer; and (5) continuously withdrawing the polymer cement of the asymmetrically tin-coupled rubbery polymer from the plug flow reactor.

Virtually any type of rubbery polymer prepared by anionic polymerization can be asymmetrically tin-coupled. The rubbery polymers which can be asymmetrically coupled will typically be synthesized by a solution polymerization technique utilizing an organolithium compound as the initiator. These rubbery polymers will accordingly normally contain a "living" lithium chain end.

The polymerizations employed in synthesizing the living rubbery polymers will normally be carried out in a hydrocarbon solvent which can be one or more aromatic, paraffinic or cycloparaffinic compounds. These solvents will normally contain from 4 to 10 carbon atoms per molecule and will be liquid under the conditions of the polymerization. Some representative examples of suitable organic solvents include pentane, isooctane, cyclohexane, methylcyclohexane, isohexane, n-heptane, n-octane, n-hexane, benzene, toluene, xylene, ethylbenzene, diethylbenzene, isobutylbenzene, petroleum ether, kerosene, petroleum spirits, petroleum naphtha, and the like, alone or in admixture.

In the solution polymerization, there will normally be from 5 to 30 weight percent monomers in the polymerization medium. Such polymerization media are, of course, comprised of the organic solvent and monomers. In most cases, it will be preferred for the polymerization medium to contain from 10 to 25 weight percent monomers. It is generally more preferred for the polymerization medium to contain 15 to 20 weight percent monomers.

The rubbery polymers which can be asymmetrically coupled can be made by the homopolymerization of a conjugated diolefin monomer or by the copolymerization of a conjugated diolefin monomer with a vinyl aromatic monomer. It is, of course, also possible to make living rubbery polymers which can be asymmetrically tin-coupled by polymerizing a mixture of conjugated diolefin monomers with one or more ethylenically unsaturated monomers, such as vinyl aromatic monomers. The conjugated diolefin monomers which can be utilized in the synthesis of rubbery polymers which can be asymmetrically tin-coupled in accordance with this invention generally contain from 4 to 12 carbon atoms. Those containing from 4 to 8 carbon atoms are generally preferred for commercial purposes. For similar reasons, 1,3-butadiene and isoprene are the most commonly utilized conjugated diolefin monomers. Some additional conjugated diolefin monomers that can be utilized include 2,3-dimethyl-1,3-butadiene, piperylene, 3-butyl-1,3-octadiene, 2-phenyl-1,3-butadiene, and the like, alone or in admixture.

Some representative examples of ethylenically unsaturated monomers that can potentially be synthesized into rubbery polymers which can be asymmetrically tin-coupled in accordance with this invention include alkyl acrylates, such as methyl acrylate, ethyl acrylate, butyl acrylate, methyl methacrylate and the like; vinylidene monomers having one or more terminal CH2=CH- groups; vinyl aromatics such as styrene, α-methylstyrene, bromostyrene, chlorostyrene, fluorostyrene and the like; α-olefins such as ethylene, propylene, 1-butene and the like; vinyl halides, such as vinylbromide, chloroethane (vinylchloride), vinylfluoride, vinyliodide, 1,2-dibromoethene, 1,1-dichloroethene (vinylidene chloride), 1,2-dichloroethene and the like; vinyl esters, such as vinyl acetate; α,β-olefinically unsaturated nitriles, such as acrylonitrile and methacrylonitrile; α,β-olefinically unsaturated amides, such as acrylamide, N-methyl acrylamide, N,N-dimethylacrylamide, methacrylamide and the like.

Rubbery polymers which are copolymers of one or more diene monomers with one or more other ethylenically unsaturated monomers will normally contain from about 50 weight percent to about 99 weight percent conjugated diolefin monomers and from about 1 weight percent to about 50 weight percent of the other ethylenically unsaturated monomers in addition to the conjugated diolefin monomers. For example, copolymers of conjugated diolefin monomers with vinylaromatic monomers, such as styrene-butadiene rubbers which contain from 50 to 95 weight percent conjugated diolefin monomers and from 5 to 50 weight percent vinylaromatic monomers, are useful in many applications.

Vinyl aromatic monomers are probably the most important group of ethylenically unsaturated monomers which are commonly incorporated into polydienes. Such vinyl aromatic monomers are, of course, selected so as to be copolymerizable with the conjugated diolefin monomers being utilized. Generally, any vinyl aromatic monomer which is known to polymerize with organolithium initiators can be used. Such vinyl aromatic monomers typically contain from 8 to 20 carbon atoms. Usually, the vinyl aromatic monomer will contain from 8 to 14 carbon atoms. The most widely used vinyl aromatic monomer is styrene. Some examples of vinyl aromatic monomers that can be utilized include styrene, 1-vinylnaphthalene, 2-vinylnaphthalene, α-methylstyrene, 4-phenylstyrene, 3-methylstyrene and the like.

Some representative examples of rubbery polymers' which can be asymmetrically tin-coupled in accordance with this invention include polybutadiene, polyisoprene, styrene-butadiene rubber (SBR), α-methylstyrene-butadiene rubber, α-methylstyrene-isoprene rubber, styrene-isoprene-butadiene rubber (SIBR), styrene-isoprene rubber (SIR), isoprene-butadiene rubber (IBR), α-methylstyrene-isoprene-butadiene rubber and α-methylstyrene-styrene-isoprene-butadiene rubber.

The polymerizations employed in making the rubbery polymer are initiated by adding an anionic initiator, such as an organometallic compound of a Group I or Group II metal, to an organic polymerization medium which contains the monomers. The polymerization is carried out by continuously adding the monomers, the initiator and solvent to a first polymerization reactor with the rubbery polymer synthesized being continuously withdrawn. This polymerization results in the production of living polydiene rubber chains. This polymerization step can be carried out in a single reactor or in a multiple reactor system.

The initiator will typically be an organometallic compound of a Group I metal or an organometallic compound of a Group II metal. For instance, the initiator can be an organolithium compound, an organosodium compound, an organopotassium compound, an organo rubidium compound, an organocesium compound, an organoberyllium compound, an organomagnesium compound, an organocalcium compound, an organo strontium compound or an organobarium compound. The initiator will preferably be an organolithium compound, an organobarium compound, an organosodium compound, an organopotassium compound or an organomagnesium compound. Organolithium compounds are normally the most preferred initiators.

The organolithium initiators which can be employed in synthesizing rubbery polymers which can be asymmetrically coupled in accordance with this invention include the monofunctional and multifunctional types known for polymerizing the monomers described herein. The multifunctional organolithium initiators can be either specific organolithium compounds or can be multifunctional types which are not necessarily specific compounds but rather represent reproducible compositions of regulable functionality.

The amount of organolithium initiator utilized will vary with the monomers being polymerized and with the molecular weight that is desired for the polymer being synthesized. However, as a general rule, from 0.01 to 1 phm (parts per 100 parts by weight of monomer) of an organolithium initiator will be utilized. In most cases, from 0.01 to 0.1 phm of an organolithium initiator will be utilized with it being preferred to utilize 0.025 to 0.07 phm of the organolithium initiator.

The choice of initiator can be governed by the degree of branching and the degree of elasticity desired for the polymer, the nature of the feedstock. and the like. With regard to the feedstock employed as the source of conjugated diene, for example, the multifunctional initiator types generally are preferred when a low concentration diene stream is at least a portion of the feedstock, since some components present in the unpurified low concentration diene stream may tend to react with carbon lithium bonds to deactivate initiator activity, thus necessitating the presence of sufficient lithium functionality in the initiator so as to override such effects.

The multifunctional initiators which can be used include those prepared by reacting an organomonolithium compounded with a multivinylphosphine or with a multivinylsilane, such a reaction preferably being conducted in an inert diluent such as a hydrocarbon or a mixture of a hydrocarbon and a polar organic compound. The reaction between the multivinylsilane or multivinylphosphine and the organomonolithium compound can result in a precipitate which can be solubilized, if desired, by adding a solubilizing monomer such as a conjugated diene or monovinyl aromatic compound, after reaction of the primary components. Alternatively, the reaction can be conducted in the presence of a minor amount of the solubilizing monomer. The relative amounts of the organomonolithium compound and the multivinylsilane or the multivinylphosphine preferably should be in the range of about 0.33 to 4 moles of organomonolithium compound per mole of vinyl groups present in the multivinylsilane or multivinylphosphine employed. It should be noted that such multifunctional initiators are commonly used as mixtures of compounds rather than as specific individual compounds.

Exemplary organomonolithium compounds include ethyllithium, isopropyllithium, n-butyllithium, sec-butyllithium, tert-octyllithium, n-eicosyllithium, phenyllithium, 2-naphthyllithium, 4-butylphenyllithium, 4-tolyllithium, 4-phenylbutyllithium, cyclohexyllithium and the like.

Exemplary multivinylsilane compounds include tetravinylsilane, methyltrivinylsilane, diethyldivinylsilane, di-n-dodecyldivinylsilane, cyclohexyltrivinylsilane, phenyltrivinylsilane, benzyltrivinylsilane, (3-ethylcyclohexyl) (3-n-butylphenyl)divinylsilane and the like.

Exemplary multivinylphosphine compounds include trivinylphosphine, methyldivinylphosphine, dodecyldivinylphosphine, phenyldivinylphosphine, cyclooctyldivinylphosphine and the like.

Other multifunctional polymerization initiators can be prepared by utilizing an organomonolithium compound, further together with a multivinylaromatic compound and either a conjugated diene or monovinylaromatic compound or both. These ingredients can be charged initially, usually in the presence of a hydrocarbon or a mixture of a hydrocarbon and a polar organic compound as a diluent. Alternatively, a multifunctional polymerization initiator can be prepared in a two-step process by reacting the organomonolithium compound with a conjugated diene or monovinyl aromatic compound additive and then adding the multivinyl aromatic compound. Any of the conjugated dienes or monovinyl aromatic compounds described can be employed. The ratio of conjugated diene or monovinyl aromatic compound additive employed preferably should be in the range of about 2 to 15 moles of polymerizable compound per mole of organolithium compound. The amount of multivinylaromatic compound employed preferably should be in the range of about 0.05 to 2 moles per mole of organomonolithium compound.

Exemplary multivinyl aromatic compounds include 1,2-divinylbenzene, 1,3-divinylbenzene, 1,4-divinylbenzene, 1,2,4-trivinylbenzene, 1,3-divinylnaphthalene, 1,8-divinylnaphthalene, 1,3,5-trivinylnaphthalene, 2,4-divinylbiphenyl, 3,5,4'-trivinylbiphenyl, m-diisopropenyl benzene, p-diisopropenyl benzene, 1,3-divinyl-4,5,8-tributylnaphthalene and the like. Divinyl aromatic hydrocarbons containing up to 18 carbon atoms per molecule are preferred, particularly divinylbenzene as either the ortho, meta or para isomer and commercial'divinylbenzene, which is a mixture of the three isomers, and other compounds, such as the ethylstyrenes, also is quite satisfactory.

Other types of multifunctional initiators can be employed such as those prepared by contacting a sec- or tert-organomonolithium compound with 1,3-butadiene, at a ratio of about 2 to 4 moles of the organomonolithium compound per mole of the 1,3-butadiene, in the absence of added polar material in this instance, with the contacting preferably being conducted in an inert hydrocarbon diluent, though contacting without the diluent can be employed if desired.

Alternatively, specific organolithium compounds can be employed as initiators, if desired, in the preparation of polymers in accordance with the present invention. These can be represented by R(Li)x wherein R represents a hydrocarbyl radical containing from 1 to 20 carbon atoms and wherein x is an integer of 1 to 4. Exemplary organolithium compounds are methyllithium, isopropyllithium, n-butyllithium, sec-butyllithium, tert-octyllithium, n-decyllithium, phenyllithium, 1-naphthyllithium, 4-butylphenyllithium, p-tolyllithium, 4-phenylbutyllithium, cyclohexyllithium, 4-butylcyclohexyllithium, 4-cyclohexylbutyllithium, dilithiomethane, 1,4-dilithiobutane, 1,10-dilithiodecane, 1,20-dilithioeicosane, 1,4-dilithiocyclohexane, 1,4-dilithio-2-butane, 1,8-dilithio-3-decene, 1,2-dilithio-1,8-diphenyloctane, 1,4-dilithiobenzene, 1,4-dilithionaphthalene, 9,10-dilithioanthracene, 1,2-dilithio-1,2-diphenylethane, 1,3,5-trilithiopentane, 1,5,15-trilithioeicosane, 1,3,5-trilithiocyclohexane, 1,3,5,8-tetralithiodecane, 1,5,10,20-tetralithioeicosane, 1,2,4,6-tetralithiocyclohexane, 4,4'-dilithiobiphenyl and the like.

The polymerization temperature utilized can vary over a broad range of from about -20°C to about 180°C. In most cases, a temperature within the range of about 30°C to about 125°C will be utilized. It is typically most preferred for the polymerization temperature to be within the range of about 60°C to about 85°C. The pressure used will normally be sufficient to maintain a substantially liquid phase under the conditions of the polymerization reaction.

The polymerization in the first reactor is conducted under conditions of agitation, such as stirring, for a length of time sufficient to permit substantially complete polymerization of monomers. In other words, the polymerization is normally carried out until high conversions are attained. For instance, the monomer conversion attained in the polymerization reactor or reactors will typically be greater than about 90 percent. It will typically be preferred for the monomer conversion attained in the first reactor to reach at least about 95 percent with conversions in excess of 98 percent being most preferred.

The polymerization in the first reactor or series of agitated polymerization reactors results in the formation of a polymer cement containing living polydiene rubber chains. This polymer cement of the rubbery polymer is then continuously fed into a second reactor. A tin halide is also continuously fed into the second reactor.

The polymerization is terminated by the continuous addition of a tin coupling agent in the second reactor. The tin coupling agent can be added in a hydrocarbon solution (e.g., in cyclohexane) to the polymerization admixture with suitable mixing for distribution and reaction. The residence time in the second reactor will be within the range of about 15 minutes to about 4 hour. It is normally preferred for the residence time in the second reactor to be within the range of about 30 minutes to about 2 hours. It is normally most preferred for the residence time in the second reactor to be within the range of about 45 minutes to about 90 minutes.

The tin coupling agent will normally be a tin tetrahalide, such as tin tetrachloride, tin tetrabromide, tin tetrafluoride or tin tetraiodide. However, tin trihalides can also optionally be used. In cases where tin trihalides are utilized, a coupled polymer having a maximum of three arms results. To induce a higher level of branching, tin tetrahalides are normally preferred. As a general rule, tin tetrachloride is most preferred.

Broadly, and exemplary, a range of about 0.01 to 4.5 milliequivalents of tin coupling agent is employed per 100 grams of the rubbery polymer to attain the desired level of asymmetrical coupling. It is normally preferred to utilize about 0.01 to about 1.5 milliequivalents of the tin coupling agent per 100 grams of polymer to obtain the desired Mooney viscosity. The larger quantities tend to result in production of polymers containing terminally reactive groups or insufficient coupling. One equivalent of tin coupling agent per equivalent of lithium is considered an optimum amount for maximum branching. For instance, if a tin tetrahalide is used as the coupling agent, one mole of the tin tetrahalide would be utilized per four moles of live lithium ends. In cases where a tin trihalide is used as the coupling agent, one mole of the tin trihalide will optimally be utilized for every three moles of live lithium ends. The tin coupling agent can be added in a hydrocarbon solution (e.g., in cyclohexane) to the polymerization admixture in the reactor with suitable mixing for distribution and reaction.

The polymer cement having tin halide homogeneously dispersed therein is continuously withdrawn from the second reactor after the desired residence time. It is then continuously fed into a plug flow reactor having a residence time of about 15 minutes to about 1 hour to produce a polymer cement of the asymmetrically tin-coupled rubbery polymer. The plug flow reactor will preferably have a residence time which is within the range of about 20 minutes to 45 minutes and will most preferably have a residence time which is within the range of about 25 minutes to 35 minutes.

The plug flow reactor is characterized by the flow of fluid through the reactor being orderly with essentially no element of fluid overtaking or mixing with any other element of fluid ahead or behind it. Actually, there may be lateral mixing of fluid in a plug flow reactor; however, there must be essentially no mixing or diffusion along the flow path. The necessary and sufficient condition for plug flow is for the residence time in the reactor to be the same for all elements of fluid passing through it. It should be noted that plug flow reactors are sometimes also known as slug flow reactors, piston flow reactors, ideal tubular reactors or unmixed flow reactors.

The polymer cement of the asymmetrically tin-coupled rubbery polymer is, of course, continuously withdrawn from the plug flow reactor. Then, a shortstop and antioxidant is typically added to the polymer cement. A tertiary chelating alkyl 1,2-ethylene diamine can optionally be added to the polymer cement to further stabilize the asymmetrically tin-coupled rubbery polymer. The tertiary chelating amines which can be used are normally chelating alkyl diamines of the structural formula: 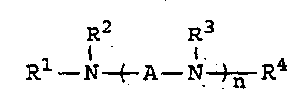 wherein n represents an integer from 1 to about 6, wherein A represents an alkylene group containing from 1 to about 6 carbon atoms and wherein R¹, R², R³ and R⁴ can be the same or different and represent alkyl groups containing from 1 to about 6 carbon atoms. The alkylene group A is the formula -(-CH₂-)ₘ wherein m is an integer from 1 to about 6. The alkylene group will typically contain from 1 to 4 carbon atoms (m will be 1 to 4) and will preferably contain 2 carbon atoms. In most cases, n will be an integer from to about 3 with it being preferred for-n to be 1. It is preferred for R¹, R², R³ and R⁴ to represent alkyl groups which contain from 1 to 3 carbon atoms. In most cases, R¹, R², R³ and R⁴ will represent methyl groups.

A sufficient amount of the chelating amine should be added to complex with any residual tin coupling agent remaining after completion of the coupling reaction. In most cases, from about 0.01 phr (parts by weight per 100 parts by weight of dry rubber) to about 2 phr of the chelating alkyl 1,2-ethylene diamine will be added to the polymer cement to stabilize the rubbery polymer. Typically, from about 0.05 phr to about 1 phr of the chelating alkyl 1,2-ethylene diamine will be added. More typically, from about 0.1 phr to about 0.6 phr of the chelating alkyl 1,2-ethylene diamine will be added to the polymer cement to stabilize the rubbery polymer.

The asymmetrical tin-coupled rubbery polymer can be recovered from the organic solvent utilizing conventional techniques. For instance, the asymmetrical tin-coupled rubbery polymer can be recovered from the organic solvent and residue by decantation, filtration, centrification and the like. It is often desirable to precipitate the asymmetrically tin-coupled rubbery polymer from the organic solvent by the addition of lower alcohols containing from about 1 to about 4 carbon atoms to the polymer solution. Suitable lower alcohols for precipitation of the rubber from the polymer cement include methanol, ethanol, isopropyl alcohol, normal-propyl alcohol and t-butyl alcohol. The utilization of lower alcohols to precipitate the asymmetrically tin-coupled rubbery polymer from the polymer cement also "kills" any remaining living polymer by inactivating lithium end groups. After the asymmetrically tin-coupled rubbery polymer is recovered from the solution, steam-stripping can be employed to reduce the level of volatile organic compounds in the asymmetrically tin-coupled rubbery polymer.

The asymmetrical coupled rubbery polymers of this invention are comprised of a Group IVa metal having at least three polydiene arms covalently bonded thereto. At least one of the polydiene arms bonded to the Group IVa metal has a number average molecular weight of less than about 40,000 and at least one of the polydiene arms bonded to the Group IVa metal has a number average molecular weight of at least about 80,000. The ratio of the weight average molecular weight to the number average molecular weight of the asymmetrical tin-coupled rubbery polymer will also be within the range of about 2 to about 2.5.

Asymmetrical tin-coupled rubbery polymers that can be used in the practice of this invention are of the structural formula: 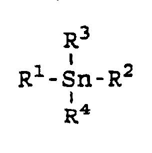 wherein R¹, R², R³ and R⁴ can be the same or different and are selected from the group consisting of alkyl groups and polydiene arms (polydiene rubber chains), with the proviso that at least three members selected from the group consisting of R¹, R², R³ and R⁴ are polydiene arms, with the proviso that at least one member selected from the group consisting of R¹, R², R³ and R⁴ is a low molecular weight polydiene arm having a number average molecular weight of less than about 40,000, with the proviso that at least one member selected from the group consisting of R¹, R², R³ and R⁴ is a high molecular weight polydiene arm having a number average molecular weight of greater than about 80,000, and with the proviso that the ratio of the weight average molecular weight to the number average molecular weight of the asymmetrical tin-coupled rubbery polymer is within the range of about 2 to about 2.5. It should be noted that R¹, R², R³ and R⁴ can be alkyl groups because it is possible for the tin halide coupling agent to react directly with alkyl lithium compounds which are used as the polymerization initiator.

In most cases, four polydiene arms will be covalently bonded to the tin atom in the asymmetrical tin-coupled rubbery polymer. In such cases, R¹, R², R³ and R⁴ will all be polydiene arms. The asymmetrical tin-coupled rubbery polymer will often contain a polydiene arm of intermediate molecular weight as well as the low molecular weight arm and the high molecular weight arm. Such intermediate molecular weight arms will have a molecular weight which is within the range of about 45,000 to about 75,000. It is normally preferred for the low molecular polydiene arm to have a molecular weight of less than about 30,000 with it being most preferred for the low molecular weight arm to have a molecular weight of less than about 25,000. It is normally preferred for the high molecular polydiene arm to have a molecular weight of greater than about 90,000 with it being most preferred for the high molecular weight arm to have a molecular weight of greater than about 100,000.

Tires containing the inserts of this invention can be comprised of a toroidally-shaped carcass and an outer, circumferential tread designed to be ground-contacting, wherein said carcass is comprised of two spaced-apart inextensible bead portions, two spaced-apart sidewalls each individually extending radially inward from and connecting said tread to said bead potions and at least one cord reinforced ply extending from bead to bead and through the sidewalls; an improvement in which a substantially crescent-shaped rubber insert is juxtapositioned to and axially inward of at least one of said carcass plies in each of said sidewalls of the tire.

It is to be appreciated that the insert is sulfur co-cured with the tire assembly of said tread and carcass as a whole. Preferably, the insert(s) have a maximum thickness at a location about midway between the bead portions and the tread in the sidewall region of the tire.

In the practice of this invention, a significant function of the rubber composition-based insert in the sidewall portion of the tire is to stiffen/support the sidewall structure when the tire is operated without inflation pressure.

The rubber composition-based inserts are elastomeric in nature having a substantially crescent cross-sectional shape and material properties selected to enhance inflated ride performance while promoting the tire's run-flat durability. The inserts, if desired, may also be individually reinforced with cords or short fibers. Thus, one or more of such inserts may be so-reinforced.

The shape of the inserts is described as being substantially crescent in shape. This is intended to also include an entrunkated crescent shape, particularly where the entrunkated portion of the crescent-shaped insert is juxtapositioned to the tire's bead portion.

In further practice of the invention, said tire carcass may have from one-to three plies comprised of a first axially inner ply and optionally one or two additional plies as a second ply and third ply, respectively; each additional ply positioned sequentially axially outward from said first ply in the sidewall region of the tire.

Accordingly, in accordance with this invention, said tire contains one ply in its carcass wherein said insert is juxtapositioned to and axially inward of said ply in the sidewall region of the tire.

In further accordance with this invention, said tire contains, in its carcass, an axially inner first ply and a second ply axially outward from the first ply; wherein said insert is juxtapositioned to and axially inward of said first ply, in the sidewall region of the tire.

In additional accordance with this invention, said tire contains, in its carcass, an axially inner first ply and an axially outer second ply; wherein said insert is juxtapositioned to and interposed between said first and second ply, in the sidewall region of the tire.

In further accordance with this invention, said tire contains, in its carcass, an axially inner first ply and an axially outer second ply; wherein one of said inserts is juxtapositioned to and interposed between said first and second ply, in the sidewall region of the tire, and another of said inserts is juxtapositioned to and axially inward of said first ply, in the sidewall region of the tire.

In further accordance with this invention, said tire contains, in its carcass, an axially inner first ply, a second ply axially outward from said first ply and a third ply axially outward from said second ply; wherein said insert is juxtapositioned to and axially inward of said first ply, in the sidewall region of the tire.

In additional accordance with this invention, said tire contains, in its carcass, an axially inner first ply, a second ply axially outward from said first ply and a third ply axially outward from said second ply; wherein said insert is juxtapositioned to and interposed between (a) said first and second plies and/or (b) said second and third plies, in the sidewall region of the tire.

In further accordance with this invention, said tire contains, in its carcass, an axially inner first ply, a second ply axially outward from said first ply and a third ply axially outward from said second ply; wherein said insert is juxtapositioned to and interposed between (a) said first and second plies and/or (b) said second and third plies, in the sidewall region of the tire and, also, an insert juxtapositioned to and axially inward of the innermost of said plies.

In one embodiment, the innermost ply, or plies, has synthetic or textile cord reinforcement of polyester, nylon, rayon or aramid, preferably rayon or nylon; while the outermost ply preferably has aramid, carbon fiber, fiberglass or metal cord reinforcement, preferably brass and/or zinc-coated steel cords.

Thus, in a preferred embodiment, the first ply has reinforcing cords of rayon or nylon, an aramid fiber, and the second and additional plies are steel cords.

The term "ply" is contemplated to include cord reinforced inserts which do not extend entirely from one bead core to the opposite bead core. It is, however, contemplated that at least one ply must extend from bead core to the opposite bead core, preferably a radial ply. A second ply can extend from a bead core to just laterally under one or more of the reinforcing belts of the belt structure.

In one aspect, the outermost ply preferably has cords of a higher modulus (i.e., steel cords) and the innermost ply, or plies, have cords of a lower modulus (i.e., nylon or rayon).

At least one ply, preferably the innermost ply, extended from bead core to bead cord and wraps around the bead core. Alternatively, where two or more plies are used, at least one of the additional plies, while extending from bead core to bead core, does not actually wrap around the bead core.

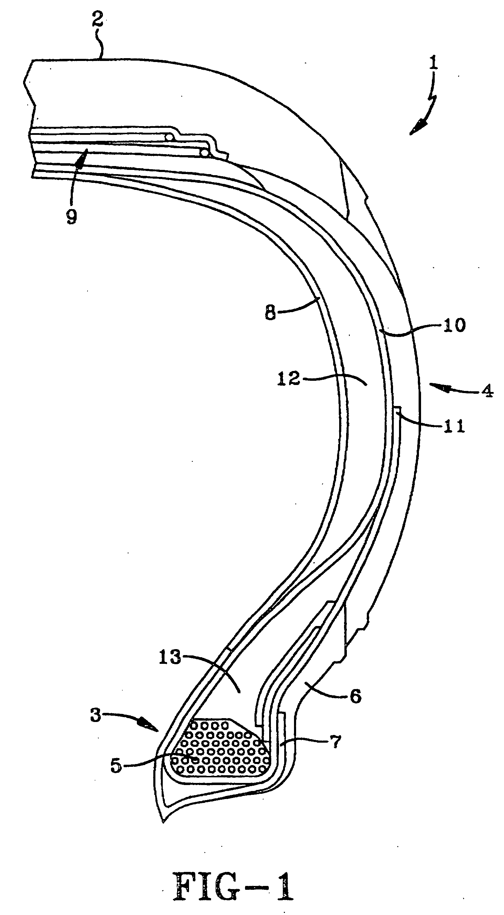

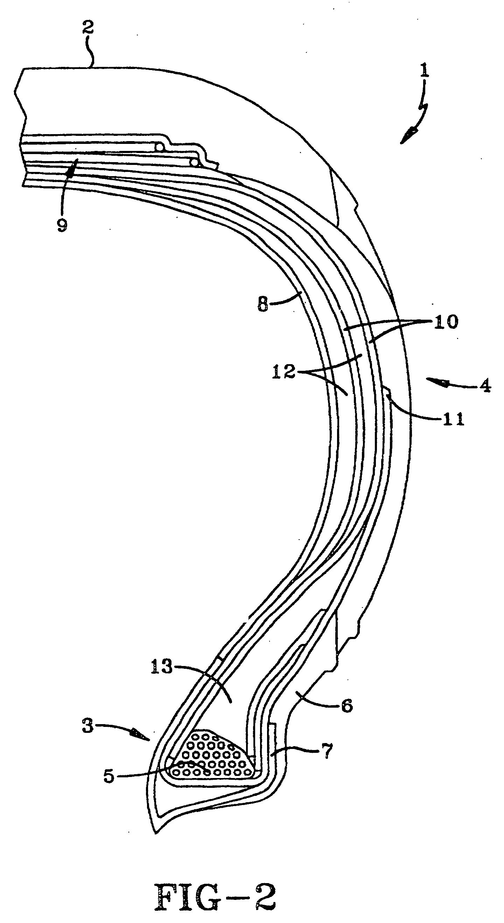

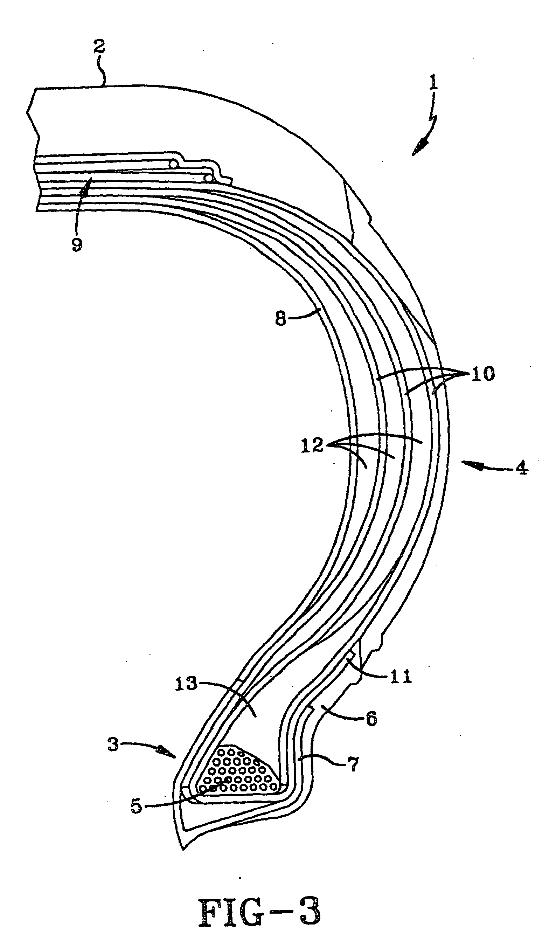

Referring to the drawings, FIGS 1, 2 and 3 show the fragmentary cross-section of a tire 1, its tread 2, bead portion 3., sidewall or sidewall region 4, inextensible wire bead core 5, rubber chafer 6, rubber toeguard 7, rubber composition innerliner 8, belt structure 9 underlying a portion of the tread 2, carcass ply 10, carcass ply turnup 11, insert 12 and apex 13.

The cords for use in the carcass plies may comprise from one (monofilament) to multiple twisted filaments. The number of total filaments in the cord may range from 1 to 13. The cords, particularly metallic cords, of the carcass ply are generally oriented such that the tire according to the present invention is what is commonly referred to as a radial.

The steel cord of the carcass ply intersect the equatorial plane (EP) of the tire at an angle in the range of from 75° to 105°. Preferably, the steel cords intersect at an angle of from 82° to 98°. A more preferred range is from 89° to 91°.

The first and second reinforcing ply structure each may comprise a single ply layer; however, any number of carcass plies may be used. As further illustrated in the Figures, the first ply structure has a pair of turnup ends respectively which wrap about each bead core 5 of the bead portion 3 of the carcass. The ends 11 of the second ply 10 are in proximity to the bead core 5 and terminate radially adjacent on either side of the bead core 5, above the bead core 5 or can be wrapped around the bead core 5 and terminates radially below the turnup end 11 of the first ply 10 as shown. The turnup ends 11 of the first ply 10 wrap about the second ply ends and the bead core 5. The turnup ends of the first ply 11 terminates radially a distance above the nominal rim diameter of the tire 1 in proximity to the radial location of the maximum section width of the tire. In a preferred embodiment, the turnup ends are located within 20 percent of the section height of the tire from the radial location of the maximum section width, most preferably terminating at the radial location of the maximum section width.

The bead core 5 is preferably constructed of a single or monofilament steel wire continuously wrapped. Located within the bead region 3 and the radially inner portions of the sidewall portions 4 are high modulus elastomeric apex inserts disposed between carcass reinforcing structure 11 and the turnup ends 11, respectively. The elastomeric apex inserts 13 extend from the radially outer portion of bead portions respectively, up into the sidewall portion gradually decreasing in cross-sectional width. The elastomeric apex inserts 13 terminate at a radially outer end.

The inserts 12 may extend from each bead region radially to the edge of the tread, usually to just beneath the reinforcing belt structures 9. As illustrated in the Figures, the sidewall portions may each include a first insert 12 and a second insert 12 and even a third insert 12. The first inserts 12 are positioned as described above. The second inserts 12 are located (interposed) between the first and the second plies 10, respectively. The second insert 12 extends from each bead region 3, or portion, radially outward to the edge of the tread 2, namely, to just beneath the reinforcing belt structure 9.

In one embodiment, the first inserts 10 each have a thickness at its maximum thickness of at least three percent of the maximum section height "SH" at a location approximately radially aligned to the maximum section width of the tire.

The second insert, and third insert, if used, has a thickness at its maximum thickness of at least one and one-half percent (1.5%) of the maximum section height of the tire at the location radially above the maximum section width of the tire. In a preferred embodiment, the elastomeric second inserts, and third insert, if used, each have a thickness of approximately one and one-half percent (1.5%) of the maximum section height SH of the tire at a radial location of about 75 percent of the section height SH. For example, in a P275/40ZR17-size high performance tire, this thickness of the second insert of the tire equals 0.08 inches (2 mm). At the location approximately radially aligned with the location of the maximum section width of the tire, the thickness of the second insert is 0.05 inches (1.3 mm).

The overall cross-sectional thickness of the combination of elastomeric inserts preceding from the bead portions to the radial location of the maximum section width (SW) is preferably of constant thickness. The overall sidewall and carcass thickness is at least 0.45 inches (11.5 mm) at the maximum section width location and increases to an overall thickness in the region where it merges into the shoulder near the lateral tread edges. Preferably, the overall thickness of the sidewall in the shoulder region of the tire is at least one hundred percent (100%) of the overall sidewall thickness at the maximum section width (SW). This ratio means that the sidewall can be made substantially thinner than the predecessor-type runflat tires.

As previously discussed, the tire of the present invention has at least one ply having a turnup end 11 (wrapped around the bead core 5) while another ply can simply be terminated adjacent to the bead core 5 without actually wrapping around the bead core 5.

The first insert 12 is preferably made of elastomeric material. The first insert 12 is designed to prevent the tire's sidewall from collapsing when operating under no inflation pressure. The insert 12 can be of a wide range of shore A hardnesses from a relative soft shore A of about 50 to very hard Shore A of about 95. As a general rule, with stiffer material, similar performance can be attained with the insert having a thinner cross-section.

The second insert 12, and third insert 12, if used, can be of the same or different material physical properties relative to the first insert. This means that the combination of a hard second insert 12, and/or third insert 12, if used, with a softer first insert 12 is contemplated as well as the combination of a hard first insert 12 with a softer second and/or third insert 12. The elastomeric materials of the second insert may similarly be in the 50 to 95 shore A range.

The second insert 12 and third insert 12, if used, as shown in the Figures, is made of elastomeric material. These inserts 12 can be used in multiples of inserts interposed between adjacent plies when more than two plies are used in the carcass structure.

The second inserts 12, and third inserts 12, when used, act as a spacer between the adjacent plies. The cords of the plies particularly the radially outer ply is placed in tension when the tire is operated uninflated.

In practice, the rubber compositions for the inserts 12 utilized in this invention for the aforesaid pneumatic tire construction are preferably characterized by physical properties which enhance their utilization in the invention which are, collectively, believed to be a departure from properties of rubber compositions normally used in pneumatic tire sidewalls, particularly the combination of inserts 12 and with plies 10 having a combination of either dissimilar or similar high stiffness yet essentially low hysteresis properties.

In particular, for the purposes of this invention, the aforesaid inserts 12 are designed to have a high degree of stiffness yet also having a relatively low hysteresis for such a degree of stiffness. This enabled the benefits of the change in moduli of the reinforcing cords to be fully appreciated.

The stiffness of the rubber composition for inserts 12 is desirable for stiffness and dimensional stability of the tire sidewall 4. A similar stiffness of the rubber composition for the ply coat for one or more of plies is desirable for overall dimensional stability of the tire carcass, including its sidewalls, since it extends through both sidewalls and across the crown portion of the tire.

However, it is to be appreciated that rubbers with a high degree of stiffness in pneumatic tires normally be expected to generate excessive internal heat during service conditions (operating as tires on a vehicle running under load and/or without internal inflation pressure), particularly when the rubber's stiffness is achieved by a rather conventional method of simply increasing its carbon black content. Such internal heat generation within the rubber composition typically results in a temperature increase of the stiff rubber and associated tire structures which can potentially be detrimental to the useful life of the tire 1.

The hysteresis of the rubber composition is a measure of its tendency to generate internal heat under service conditions. Relatively speaking, a rubber with a lower hysteresis property generates less internal heat under service conditions than an otherwise comparable rubber composition with a substantially higher hysteresis. Thus, in one aspect, a relatively low hysteresis is desired for the rubber composition for the fillers and the plycoat(s) for one or more of the plies 10.

Hysteresis is a term for heat energy expended in a material (e.g., cured rubber composition) by applied work and low hysteresis of a rubber composition is indicated by a relatively high rebound and relatively low tangent delta (Tan Delta) property values.

Accordingly, it is important that the rubber compositions for one or more of the inserts 12 and plycoats for one or more of plies 10 have the properties of both relatively high stiffness and low hysteresis.

It should readily be understood by one having skill in the art that rubber compositions for components of the pneumatic tire, including the fillers can be compounded by methods generally known in the rubber compounding art, such as mixing the various sulfur-vulcanizable constituent rubbers with various commonly used additive materials such as, for example, curing aids, such as sulfur, activators, retarders and accelerators, processing additives, such as rubber processing oils, resins including tackifying resins, silicas and plasticizers, fillers, pigments, or other materials such as tall oil resins, zinc oxide, waxes, antioxidants and antiozonants, peptizing agents and reinforcing materials such as, for example, carbon black. As known to those skilled in the art, depending on the intended use of the sulfur vulcanizable and sulfur-vulcanized materials (rubbers), the certain additives mentioned above are selected and commonly used in conventional amounts.

Typical additions of carbon black comprise about 20 to about 130 parts by weight per 100 parts by weight, of diene rubber (phr), although about 30 to about a maximum of about 110 phr of carbon black is desirable for the high stiffness rubbers desired for the indicated inserts and plycoat(s) used in this invention. The amount of carbon black included in the insert compound will most preferably be within the range of about 70 phr to about 90 phr. Typical amounts of resins, if used, including tackifier resins and stiffness resins, if used, including unreactive phenol formaldehyde tackifying resins and, also stiffener resins of reactive phenol formaldehyde resins and resorcinol or resorcinol and hexamethylene tetramine, may collectively comprise about 1 to 10 phr, with a minimum tackifier resin, if used, being 1 phr and a minimum stiffener resin, if used, being 3 phr. Such resins may sometimes be referred to as phenol formaldehyde-type resins. Typical amounts of processing aids comprise about 4 to about 10.0 phr. Typical amounts of silica, if used, comprise about 5 to about 50, although 5 to about 15 phr is desirable, and amounts of silica coupling agent, if used, comprise about 0.05 to about 0.25 parts per part of silica, by weight. Representative silicas may be, for example, hydrated amorphous silicas. A representative coupling agent may be, for example, a bifunctional sulfur containing organo silane such as, for example, bis-(3-triethoxy-silylpropyl) tetrasulfide, bis-(3-trimethoxy-silylpropyl) tetrasulfide and bis-(3-trimethoxy-silylpropyl) tetrasulfide grafted silica from DeGussa, AG. Typical amounts of antioxidants comprise 1 to about 5 phr. Representative antioxidants may be, for example, diphenyl-p-phenylenediamine and others, such as those disclosed in The Vanderbilt Rubber Handbook (1978), pages 344-346. Suitable antiozonant(s) and waxes, particularly microcrystalline waxes, may be of the type shown in The Vanderbilt Rubber Handbook (1978), pages 346-347. Typical amounts of antiozonants comprise 1 to about 5 phr. Typical amounts of stearic acid and/or tall oil fatty acid may comprise about 1 to about 3 phr. Typical amounts of zinc oxide comprise about 2 up to about 8 or 10 phr. Typical amounts of waxes comprise 1 to about 5 phr. Typical amounts of peptizers comprise 0.1 to about 1 phr. The presence and relative amounts of the above additives are not an aspect of the present invention, so long as the hardness and modulus value requirements of the filler(s) used in the tire sidewalls in the practice of this invention.

The vulcanization of the rubber composition(s) is/are conducted in the presence of a sulfur vulcanizing agent. Examples of suitable sulfur vulcanizing agents include elemental sulfur (free sulfur) or sulfur donating vulcanizing agents, for example, an amine disulfide, polymeric polysulfide or sulfur olefin adducts. Preferably, the sulfur vulcanizing agent is elemental sulfur. As known to those skilled in the art, sulfur vulcanizing agents are used in an amount ranging from about 0.5 to about 8 phr with a range of from 2 to about 5 being preferred for the stiff rubbers desired for use in this invention.

Accelerators are used to control the time and/or temperature required for vulcanization and to improve the properties of the vulcanizate. In one embodiment, a single accelerator system may be used; i.e., primary -accelerator. Conventionally, a primary accelerator is used in amounts ranging from about 0.5 to about 3 phr. In another embodiment, combinations of two or more accelerators in which a primary accelerator is generally used in the larger amount (0.5 to about 2 phr), and a secondary accelerator which is generally used in smaller amounts (0.05-.50 phr), in order to activate and to improve the properties of the vulcanizate. Combinations of such accelerators have historically been known to produce a synergistic effect of the final properties of sulfur-cured rubbers and are often somewhat better than those produced by use of either accelerator alone. In addition, delayed action accelerators may be used which are less affected by normal processing temperatures but produce satisfactory cures at ordinary vulcanization temperatures. Representative examples of accelerators include amines, disulfides, guanidines, thioureas, thiazoles, thiurams, sulfenamides, dithiocarbamates and xanthates. Preferably, the primary accelerator is a sulfenamide. If a second accelerator is used, the secondary accelerator is preferably a guanidine, dithiocarbamate or thiuram compound, although a second sulfenamide accelerator may be used. In the practice of this invention, one and sometimes two or more accelerators are preferred for the high stiffness rubbers.

The runflat tire containing the inserts of this invention can be built, shaped, molded and cured by various methods which will be readily apparent to those having skill in the art. In general, the runflat tires of this invention can be manufactured using standard techniques with, of course, the exception of an insert therein containing a filler, a fatty acid and a rubbery polymer that is coupled with a Group IVa metal.

In a preferred embodiment, the insert of this invention is incorporated into a runflat tire of the design described in Goodyear Docket No. DN1998-091, filed on June 19, 1998 (PCT/US98/12909) the teachings of which are incorporated herein by reference in their entirety. This design relates to a pneumatic radial ply runflat tire having a tread, a carcass comprising a radial ply structure having at least one radial ply, a belt structure located between the tread and the radial ply structure, two sidewalls reinforced by one or more inserts and a tread contour of which the laterally disposed tread ribs are defined by circular curves having large radii of curvature. The outermost ply, or the single ply, is reinforced with inextensible metal cords. The sidewalls each having a rib near the radially outermost regions. The circular curves that define the cross-section contour of the central portions of the tread and the laterally disposed tread rib intersect nontangentially. A circumferentially disposed decoupling groove underlies each respective nontangential locus of points of nontangential intersection of the circular curves that define the cross-section contour of the tread. The circular curve defining the contour of each radially outward-most sidewall rib intersects nontangentially with the circular curve that defines the contour of each laterally disposed tread rib. A second set of decoupling grooves is disposed such that one groove is located circumferentially in each shoulder region. where the contour-defining curves intersect nontangentially between each radially disposed. sidewall rib and the adjacent laterally disposed tread rib. The lateral-most decoupling grooves between the laterally disposed tread rib and the sidewall rib are circumferential and continuous, or they are circumferential and non-continuous. The decoupling grooves between the laterally disposed tread rib and the central portions of the tread are circumferential and straight in design, or they have a zig-zagged pattern. In a preferred embodiment, the runflat tire is a pneumatic radial having a low-aspect-ratio (in the range of about 30 percent to about 60 percent) design. This embodiment has potential for runflat use in high-performance sports-type vehicles or light trucks. The distinctive feature of this low-aspect-ratio, radial ply runflat pneumatic tire is that runflat tread lift is minimized and that tread footprint is widened during runflat operation.

In another preferred embodiment, the insert of this invention is incorporated into a runflat tire of the design described in Goodyear Docket No. DN1998-065, filed on July 6, 1998 (PCT/US98/13929) the teachings of which are incorporated herein by reference in their entirety. This design relates to a pneumatic radial ply runflat tire having a tread, a casing with two sidewalls, two radial plies extending from two annular beads and a belt reinforcement structure located radially between the tread and the plies. This runflat sidewall design is characterized by an inner radial ply having metal reinforcement cords and an outer radial ply having organic fiber reinforcement cords. An insert is circumferentially disposed between the inner and outer plies in the region of each sidewall adjacent to the tread shoulder. The insert in each sidewall has properties characterized by high modulus and low hysteresis. The strength and rigidity of the insert can be adjusted by the incorporation of organic fibers which are aligned circumferentially or radially within the insert. Metal reinforcing cords in the outer radial ply have properties characterized by a high modulus of elasticity, rigidity with respect to carrying the compressive load on the inserts during runflat operation and good thermal conductivity which distributes heat generated within the inserts during runflat operation. During runflat operation, the high modulus of the reinforcing metal cords of the outer ply carry a substantial compressive load, thereby reducing the compression load carried by the single insert in each sidewall. It should also be noted that, during runflat operation, the outer steel fiber reinforced ply has good flexibility accompanied by high tensile-stress-bearing capacity. In this design, it is preferred for the outer radial ply to have metallic cords at an angle of from about 75° to about 105° with respect to the equatorial plane of the tire. It can also be desirable for the insert to be filled with short reinforcing fibers which are aligned circumferentially or radially to increase the tensile-stress-bearing capacity of the insert. It is normally preferred for such short reinforcing fibers to be aligned primarily in the radial direction.

In still another preferred embodiment of this invention, the insert is incorporated into a runflat tire of the design described in United States Patent Application Serial No. 08/865,489, filed May 29, 1997 (US-A-5871600) the teachings of which are incorporated herein by reference in their entirety. This design relates to a tire having a tread, a belt structure and a carcass. The carcass has a pair of sidewalls with each sidewall having at least one ply or being reinforced with cords having a modulus of at least 10 GPa. In this tire design, at least one ply has a pair of turnup ends wrapped around a pair of inextensible bead cores. Each sidewall structure has at least one insert radially inward of the first ply and a second ply extending at least to each bead core. In this structure, the second ply is spaced from the first ply by a second insert in the sidewall. At least one ply in this tire structure is reinforced with substantially inextensible cords having a modulus greater than the modulus of the other ply. When loaded, this tire has a neutral axis of bending of the sidewall structure closer in proximity to the ply reinforced with cords of a higher modulus than to the ply reinforced with cords of the lower modulus. In a highly preferred embodiment, the first ply has synthetic or textile cords of polyester, nylon, rayon or aramid; while the second ply, most preferably, has aramid cords or metal cords; most preferably, steel cords. The first and second inserts preferably have a cross-sectional shape and material properties selected to enhance inflated ride performance while insuring runflat durability. The inserts can also be reinforced with cords or short fibers.

This invention is illustrated by the following examples which are merely for the purpose of illustration and are not to be regarded as limiting the scope of the invention or the manner in which it can be practiced. Unless specifically indicated otherwise, parts and percentages are given by weight.

### Example 1

In this example, a coupled isoprene-butadiene rubber (IBR) which was suitable for utilization in the tire inserts of this invention was prepared in a one-gallon (3.8 liters) batch reactor at 70°C. In the procedure used, 2,000 grams of a silica/molecular sieve/aluminum dried premix containing 19.0 weight percent of a mixture of isoprene and 1,3-butadiene in hexanes at the ratio of 10:90 was charged into a one-gallon (3.8 liters) reactor. After the amount of impurity in the premix was determined, 4.0 ml of a 1.0 M solution of n-butyl lithium (in hexane) was added to the reactor. The target Mn (number averaged molecular weight) was 100,000. The polymerization was allowed to proceed at 70°C for three hours. An analysis of the residual monomer indicated that monomers were all consumed. Then, 1.0 ml of a 1 M solution of tin tetrachloride (in hexane) was added to the reactor and the coupling reaction was carried out at the same temperature for 30 minutes. At this time, 1.5 phr (parts per 100 parts by weight of rubber) of 4-t-butylcatechol and 0.5 phr of TMEDA was added to the reactor to shortstop the polymerization and to stabilize the polymer.

After the hexane solvent was evaporated, the resulting IBR was dried in a vacuum oven at 50°C. The coupled IBR was determined to have a glass transition temperature (Tg) at -95°C. It was also determined to have a microstructure which contained 7 percent 1,2-polybutadiene units, 87 percent 1,4-polybutadiene units, 1 percent 3,4-polyisoprene units and 9 percent 1,4-polyisoprene units. The Mooney viscosity (ML-4) of the coupled IBR made was determined to be 99.

### Examples 2-4

The procedure described in Example 1 was utilized in these examples except that the isoprene to 1,3-butadiene ratio were changed from 10:90 to 15:85, 20:80 and 30:70. The glass transition temperatures (Tgs), Mooney viscosities (ML-4) and microstructures of these tin-coupled IBRs are listed in Table I. The 30/70 IBR (Example 4) was determined to have an Mn (number averaged molecular weight) of 386,000 and an Mw (weight averaged molecular weight) of 430,000. The precursor of Example 4 (ie, base polymer prior to coupling) was also determined to have an Mn of 99,000 and an Mw of 112,000.

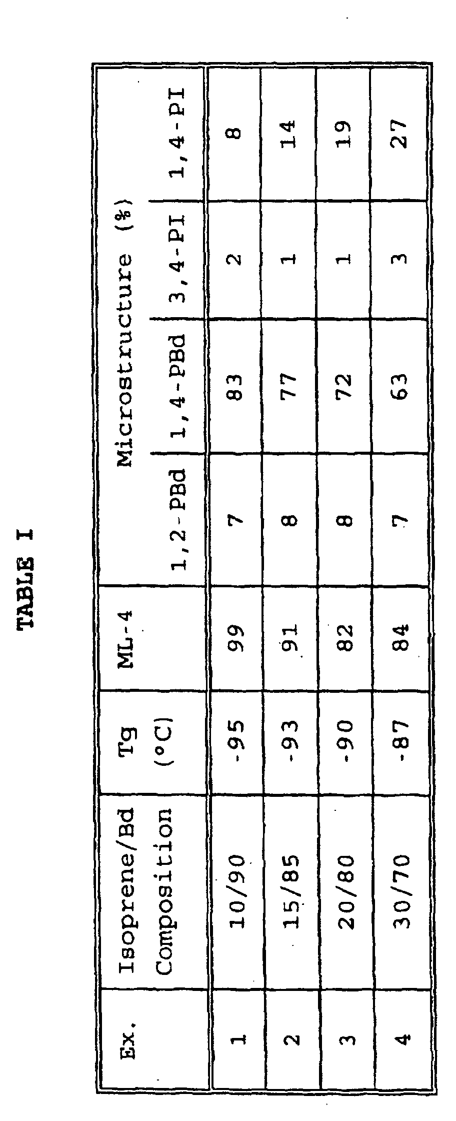

### Examples 5-8

In these examples, linear IBRs were prepared in a one-gallon reactor. The procedure described in Example 1 was utilized in these examples except that no coupling agent (tin tetrachloride) was used in these experiments and the target Mn was changed to 300,000 from 100,000. The isoprene to 1,3-butadiene ratios were 10:90, 15:85, 20:80 and 30:70. The Tgs, Mooney viscosities (ML-4), Mns (number averaged molecular weights), Mws (weight averaged molecular weights) and microstructures of these linear IBRS are listed in Table II.

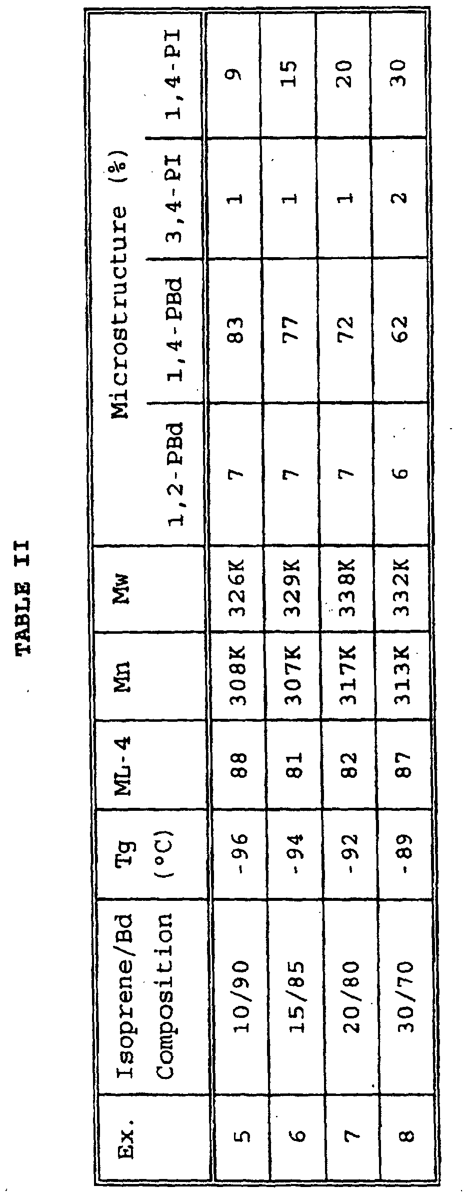

### Example 9

The tin-coupled IBR prepared in this experiment was synthesized in a three-reactor (10 gallons each) continuous system at 90°C. A premix containing isoprene and 1,3-butadiene in hexane was charged into the first reactor continuously at a rate of 65.6 grams/minute. The premix monomer solution contained a ratio of isoprene to 1,3-butadiene of 30:70 and had a total monomer concentration of 14 percent. Polymerization was initiated by adding 0.128 M solution of n-butyl lithium into the first reactor at a rate of 0.4 grams per minute. Most of the monomers were exhausted at the end of the second reactor and the resulted polymerization medium containing the live ends was continuously pushed into the third reactor where the coupling agent, tin tetrachloride (0.025 M solution in hexane), was added at a rate of 0.34 grams per minute. The residence time for all three reactors was set at 1.5 hours to achieve complete monomer conversion in the second reactor and complete coupling in the third reactor. The polymerization medium was then continuously pushed over to a holding tank containing the TMEDA and an antioxidant. The resulting polymer cement was then steam-stripped and the recovered IBR was dried in an oven at 60°C. The polymer was determined to have a glass transition temperature at -85°C and have a Mooney ML-4 viscosity of 90. It was also determined to have a microstructure which contained 8 percent 1,2-polybutadiene units, 60 percent 1,4-polybutadiene units, 29 percent 1,4-polyisoprene units and 3 percent 3,4-polyisoprene units. The polymer was determined to have an Mn (number averaged molecular weight) of 185,000 and an Mw (weight averaged molecular weight) of 276,000. The precursor of this polymer (i.e., base polymer prior to coupling) was also determined to have an Mn of 88,000 and an Mw of 151,000.

Unlike Example 4 (prepared and coupled in a batch process), which showed a symmetrical coupling of four linear precursor polymers, the polymer produced in this example via the continuous process had unsymmetrical coupling based on GPC molecular data shown above.

### Example 10-12

The isoprene-butadiene rubbers made in Example 4, 8 and 9 were then compounded, utilizing a standard tire tread test formulation. The tire tread test formulations were made by mixing 100 parts of rubber being tested with 50 parts of carbon black, 5 parts of processing oil, 2 parts of stearic acid, 3 parts of zinc oxide, 1 part of microcrystalline wax, 0.5 part of paraffin wax, 1 part of a mixed aryl-p-phenylenediamine antioxidant, 2 parts of N-(1,3-dimethyl butyl)-N'-phenyl-p-phenylene diene and 1.4 parts of sulfur. The physical properties of the compounded tire tread formulations are reported in Table III.

**TABLE III**

| Example | 8 | 4 | 9 |
|---|---|---|---|
| Rubber Type | Linear | Batch coupled | Continuous coupled |
| | | | |

| Rheometer, 150°C | | | |
|---|---|---|---|
| ML, dNm | 1.21 | 1.49 | 1.67 |
| MH, dNm | 24.06 | 25.71 | 23.71 |
| ts1, min | 4.06 | 4.86 | 5.39 |
| T25, min | 5.62 | 5.78 | 6.50 |
| T90, min | 10.36 | 9.71 | 9.88 |

| Autovibron, 11 Hz | | | |
|---|---|---|---|
| tan delta at 60°C | 0.113 | 0.083 | 0.072 |
| G' at 10% | 2.494 | 2.294 | 2.195 |
| G' at 1% | 3.435 | 2.732 | 2.566 |
| Payne effect | 72.6 | 84.4 | 85.5 |

### Examples 10-14

In this series of experiments, living isoprene-butadiene rubber cements were continuously synthesized in a first reactor. The premix monomer solution had a ratio of isoprene to 1,3-butadiene of 30:70 and had a total monomer concentration of 14 percent. Polymerization was initiated by the continuous addition of n-butyl lithium and was carried out at a temperature of about 90°C.

The living polymer cements and tin tetrachloride were continuously fed into a second reactor. The second reactor provided agitation (stirring) and had an average residence time of about 1 hour. Some of the asymmetrically tin-coupled rubbery polymer made in the second reactor was withdrawn directly with a shortstop, antioxidant and a 20 percent molar excess of TMADA (1.2 moles of TMEDA per mole of butyl lithium) being added thereto. In some cases, the polymer cement of asymmetrically tin-coupled rubbery polymer was passed through a plug flow reactor (PFR) having a residence time of about 30 minutes before the shortstop, antioxidant and TMEDA was added. The polymer samples were then recovered from the polymer cements and evaluated to determine stability.

Table IV shows the loss in Mooney ML(1+4) viscosity that was experienced after the samples were aged in an oven at 150°F (66°C) for various periods of time. The molar ratio of tin tetrachloride to butyl lithium employed in each of these experimental runs is also reported in Table IV. As an additional control, a linear isoprene-butadiene rubber which was not coupled was also evaluated.

**TABLE IV**

| Example | 10 | 11 | 12 | 13 | 14 |
|---|---|---|---|---|---|
| PFR | Yes | Yes | No | No | No |
| Sn/Li | 0.2 | 0.16 | - | 0.3 | 0.24 |
| Δ Mooney - 0 days | 0.0 | 0.0 | 0.0 | 0.0 | 0.0 |
| Δ Mooney - 1 day | 0.1 | -1.3 | 0.7 | -0.6 | - |
| Δ Mooney - 5 days | 0.1 | -1.4 | 0.8 | 3.6 | 3.9 |
| Δ Mooney - 11 days | 1.2 | 1.55 | 2.8 | 6.7 | 8.6 |
| Δ Mooney - 18 days | 2.4 | 3.1 | - | 10.7 | 10.1 |
| Δ Mooney - 22 days | 3.8 | 3.6 | - | 14.1 | 12.2 |

As can be seen from Table IV, the asymmetrically tin-coupled polymers made with the plug flow reactor (PFR) in the line had much better stability than did the rubbery samples made without using it. For instance, the rubber samples made with the PFR in the line showed a loss in Mooney ML(1+4) viscosity after 22 days at 150°C (66°C) of only 3.8 and 3.6 as compared to losses of 14.1 and 12.2 for the rubbers made without utilizing the PFR. It should also be noted that the rubbers made with the PFR in the line also showed better stability than the linear control which was not tin-coupled (see Example 12). It should be further noted that no TMEDA was added in making the tin-coupled rubber sample of Example 11.

This series of experiments shows that the insertion of a PFR into the continuous line after the second reactor, but before the shortstop is added, greatly improves the stability of the rubber made. It also shows that the inclusion of a PFR in the line may eliminate the need for the addition of a tertiary chelating 1,2-ethylene diamine, such as TMEDA, to attain satisfactory stability.

### Examples 15-16

In this experiment, a tire insert composition was made utilizing a tin-coupled polybutadiene rubber (Example 15) and compared with an identical tire insert composition that was made with a blend of natural rubber and polybutadiene rubber (Example 16). In Example 16, the rubber component of the compound contained 80 phr of natural rubber and 20 phr of polybutadiene rubber.

These rubber compounds were made by mechanically mixing the ingredients in a non-productive stage (without curatives) and a subsequent productive stage (with curatives). In the non-productive stage, 70 phr of carbon black, 6 phr of zinc oxide, 1 phr of stearic acid, 3.5 phr of antidegradants of the diarylparaphenylene diamine and dihydrotrimethylquinoline types, 2 phr of resin and 4 phr of processing oil were mixed with the rubber components for about 5 minutes to a temperature of about 130°C in a Banbury-type mixer. Then, 2 phr of zinc oxide, 3 phr of sulfenamide/diphenyl guanidine-type accelerators and about 4 phr of sulfur were mixed into the rubber compounds in a Banbury-type mixer for about 2 minutes to a temperature of about 110°C in the productive mixing stage. The rubber compounds were then vulcanized at a temperature of about 150°C for about 20 minutes. Some of the key physical properties (processibility, stiffness and hysteresis) of the cured tire insert compounds as measured on an autovibron are shown in Table V.

**TABLE V**

| Example | 15 | 16 |
|---|---|---|
| Processibility, G' before cure¹ | 128 Kpa | 221 KPa |
| Stiffness, G' after cure² | 3577 KPa | 2644 KPa |
| Hysteresis, tan δ³ | 0.074 | 0.102 |

| | | |
|---|---|---|
| ¹Determined at 100°C, 15% strain and 0.833Hz | | |
| ²Determined at 100°C, 5% strain and 11Hz | | |
| ³Determined at 100°C, 5% strain and 11Hz | | |

As can be seen from Table V, the tire insert compound of this invention (Example 15) had better processability, higher stiffness and exhibited less hysteresis than the rubber compound made as the control (Example 16). It is highly desirable for G' to be as low as possible before being cured for good processibility. As can be seen, G' was much lower in Example 15 where the tin-coupled polybutadiene rubber was employed in the tire insert compound in place of the blend of natural rubber and conventional polybutadiene rubber used in the control. However, after being cured, G' was much higher in Example 15 which is indicative of high stiffness. It is highly desirable for tire inserts to be extremely stiff after being cured. In other words, G' should be as high as possible after the insert compound is cured. Thus, the tire insert compound of this invention exhibited a lower G' before being cured and also unexpectedly showed a much higher G' after being cured than did the rubber compound made in the control. This allows for the tire insert compounds of this invention to be highly processible and to exhibit a high level of stiffness.

Even though the tire insert compositions of this invention are extremely stiff after being cured, they still exhibit a low level of hysteresis. This is again a very beneficial aspect of the present invention because low hysteresis is indicative of good rolling resistance and low heat buildup in tires. The combination of low hysteresis (low tan delta) and high stiffness is a very elusive combination of properties which is attained by the present invention.

### Examples 17-22

In this series of experiments, some additional tire insert compounds were made utilizing the same general procedure as was described in Examples 15-16. Examples 17 and 18 were conducted as controls. In Example 17, the rubber component of the tire insert compound was a blend of 80 phr of natural rubber and 20 phr of a conventional high cis-1,4-polybutadiene rubber. In Example 18, the rubber component of the insert compound was a solution polybutadiene rubber having 55 percent trans-microstructure, 37 percent cis-microstructure and 8 percent vinyl-microstructure. The rubber component used in Example 19 was a high molecular weight tin-coupled polybutadiene rubber having a Mooney ML 1+4 viscosity of 90. In Example 20, the rubber component of the insert composition was a low molecular weight tin-coupled polybutadiene having a Mooney ML 1+4 viscosity of 55. The rubber component employed in Example 21 was a high molecular weight isoprene-butadiene rubber having a bound styrene content of 30 percent and a Mooney ML 1+4 viscosity of 90. In Example 22, the rubber component of the insert composition was a low molecular weight isoprene-butadiene rubber having a bound styrene content of 30 percent and a Mooney ML 1+4 viscosity of 59.

The key physical properties (processibility, stiffness and hysteresis) of the cured tire insert compounds at 50 percent, 70 percent and 90 percent carbon black (CB) loadings as measured on an autovibron are shown in Table VI. As can be seen from this example, the insert compounds made with the tin-coupled rubbers exhibited better processibility, higher stiffness and low hysteresis.

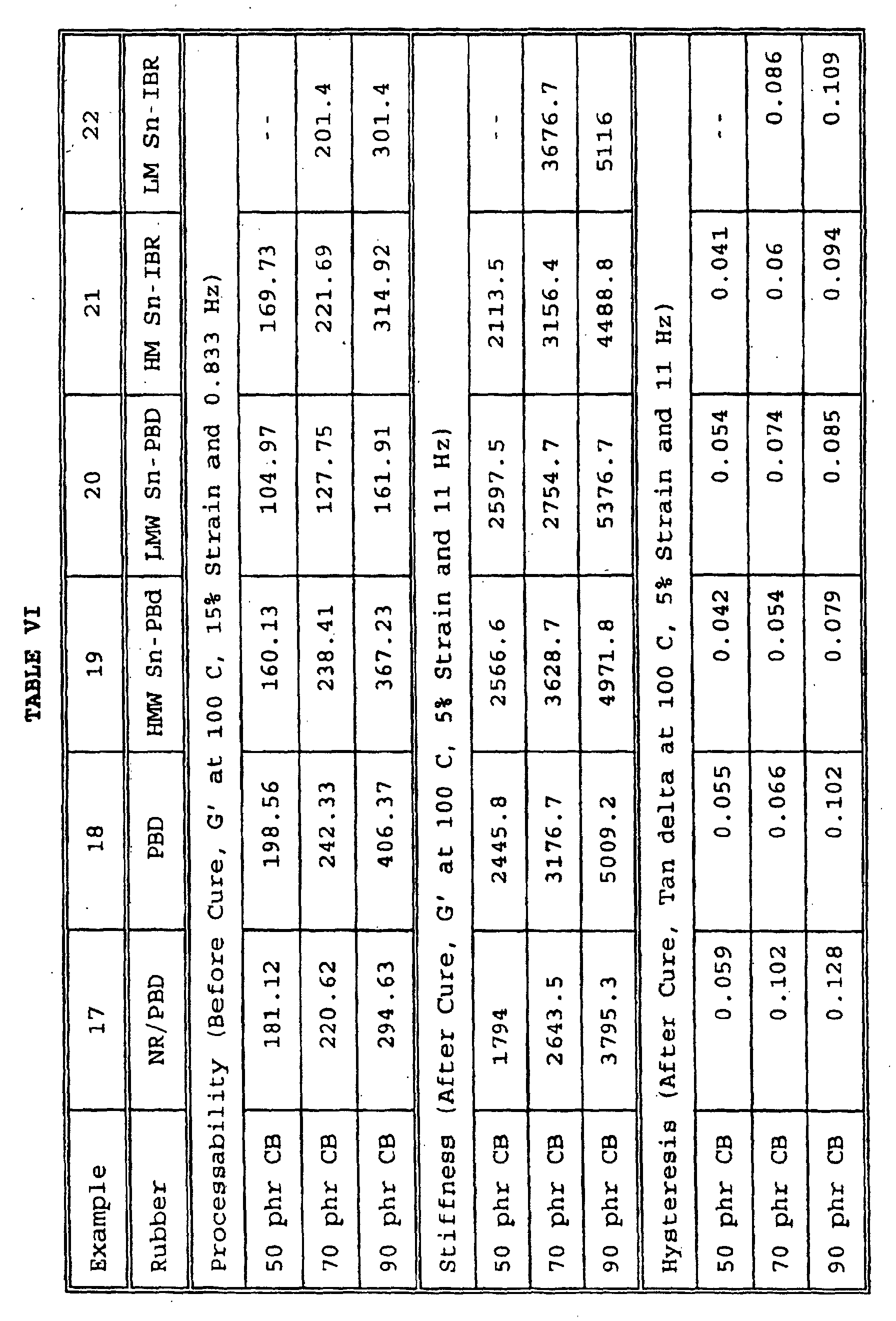

Variations in the present invention are possible in light of the description of it provided herein. While certain representative embodiments and details have been shown for the purpose of illustrating the subject invention, it will be apparent to those skilled in this art that various changes and modifications can be made therein without departing from the scope of the subject invention. It is, therefore, to be understood that changes can be made in the particular embodiments described which will be within the full intended scope of the invention as defined by the following appended claims.

## Claims

1. A pneumatic tire (1) having at least one insert (12) to provide said pneumatic tire with runflat capability, **characterized in that** the insert is a composition of matter which is comprised of (1) a cured polydiene rubber that is coupled with at least one Group IVa metal selected from tin, lead, germanium and silicon, (2) from 20 phr to 130 phr of a filler and (3) from 0.1 phr to 5 phr of a fatty acid.

2. The pneumatic tire specified in claim 1 **characterized in that** the filler is carbon black.

3. The pneumatic tire specified in claim 1 or 2 **characterized in that** the fatty acid is a mixture of fatty acids.

4. The pneumatic tire specified in claim 1 or 2 **characterized in that** the carbon black is present at a level which is within the range of 30 phr to 110 phr.

5. The pneumatic tire specified in any of the preceding claims **characterized in that** the stearic acid is present at a level which is within the range of 0.4 phr to 3 phr.

6. The pneumatic tire specified in any of the preceding claims **characterized in that** the cured polydiene rubber is coupled with tin.

7. The pneumatic tire specified in any of the preceding claims **characterized in that** the insert is a composition of matter that is further comprised of 10 phr to 70 phr of natural rubber.

8. The pneumatic tire specified in any of the preceding claims **characterized in that** the carbon black is present at a level which is within the range of 70 phr to 90 phr.

9. The pneumatic tire specified in any of the preceding claims **characterized in that** the stearic acid is present at a level which is within the range of 0.5 phr to 1.5 phr.

10. The pneumatic tire specified in any of the preceding claims **characterized in that** the cured polydiene rubber is a styrene-butadiene rubber.

## Patentansprüche

1. Luftreifen (1) mit mindestens einer Einlage (12) zum Versehen des Luftreifens mit Notlaufeigenschaften, **dadurch gekennzeichnet, dass** die Einlage eine Stoffzusammensetzung ist, die (1) einen vulkanisierten Polydienkautschuk, der mit mindestens einem Metall der Gruppe IVa, ausgewählt aus Zinn, Blei, Germanium und Silicium, gekuppelt ist, (2) 20 ThK bis 130 ThK eines Füllstoffes und (3) 0,1 ThK bis 5 ThK einer Fettsäure umfasst.

2. Luftreifen wie in Anspruch 1 angegeben, **dadurch gekennzeichnet, dass** der Füllstoff Ruß ist.

3. Luftreifen wie in Anspruch 1 oder 2 angegeben, **dadurch gekennzeichnet, dass** die Fettsäure eine Mischung von Fettsäuren ist.

4. Luftreifen wie in Anspruch 1 oder 2 angegeben, **dadurch gekennzeichnet, dass** der Ruß mit einem Anteil vorhanden ist, der im Bereich von 30 ThK bis 110 ThK liegt.

5. Luftreifen wie in irgendeinem der vorhergehenden Ansprüche angegeben, **dadurch gekennzeichnet, dass** Stearinsäure mit einem Anteil vorhanden ist, der im Bereich von 0,4 ThK bis 3 ThK liegt.

6. Luftreifen wie in irgendeinem der vorhergehenden Ansprüche angegeben, **dadurch gekennzeichnet, dass** der vulkanisierte Polydienkautschuk mit Zinn gekuppelt ist.

7. Luftreifen wie in irgendeinem der vorhergehenden Ansprüche angegeben, **dadurch gekennzeichnet, dass** die Einlage eine Stoffzusammensetzung ist, die ferner 10 ThK bis 70 ThK Naturkautschuk umfasst.

8. Luftreifen wie in irgendeinem der vorhergehenden Ansprüche angegeben, **dadurch gekennzeichnet, dass** der Ruß in einem Anteil vorhanden ist, der im Bereich von 70 ThK bis 90 ThK liegt.

9. Luftreifen wie in irgendeinem der vorhergehenden Ansprüche angegeben, **dadurch gekennzeichnet, dass** die Stearinsäure in einem Anteil vorhanden ist, der im Bereich von 0,5 ThK bis 1,5 ThK liegt.

10. Luftreifen wie in irgendeinem der vorhergehenden Ansprüche angegeben, **dadurch gekennzeichnet, dass** der vulkanisierte Polydienkautschuk ein Styrol-Butadien-Kautschuk ist.

## Revendications

1. Bandage pneumatique (1) comportant au moins une insertion (12) qui donne audit bandage pneumatique l'aptitude à rouler à plat, **caractérisé en ce que** l'insertion est une composition de matière constituée par :
(1) un caoutchouc polydiène durci qui est couplé avec au moins un métal du groupe IVa choisi parmi l'étain, le plomb, le germanium et le silicium,
(2) 20 parties pour cent à 130 parties pour cent d'une charge, et
(3) 0,1 partie pour cent à 5 parties pour cent d'un acide gras.

2. Bandage pneumatique selon la revendication 1, **caractérisé en ce que** la charge est du noir de carbone.

3. Bandage pneumatique selon la revendication 1 ou 2, **caractérisé en ce que** l'acide gras est un mélange d'acides gras.

4. Bandage pneumatique selon la revendication 1 ou 2, **caractérisé en ce que** le noir de carbone est présent en une proportion comprise dans l'intervalle allant de 30 parties pour cent à 100 parties pour cent.

5. Bandage pneumatique selon l'une quelconque des revendications précédentes, **caractérisé en ce que** l'acide stéarique est présent en une proportion comprise dans l'intervalle allant de 0,4 partie pour cent à 3 parties pour cent.

6. Bandage pneumatique selon l'une quelconque des revendications précédentes, **caractérisé en ce que** le caoutchouc polydiène durci est couplé avec de l'étain.

7. Bandage pneumatique selon l'une quelconque des revendications précédentes, **caractérisé en ce que** l'insertion est une composition de matière qui renferme en outre 10 parties pour cent à 70 parties pour cent de caoutchouc naturel.

8. Bandage pneumatique selon l'une quelconque des revendications précédentes, **caractérisé en ce que** le noir de carbone est présent en une proportion comprise dans l'intervalle allant de 70 parties pour cent à 90 parties pour cent.

9. Bandage pneumatique selon l'une quelconque des revendications précédentes, **caractérisé en ce que** l'acide stéarique est présent en une proportion comprise dans l'intervalle allant de 0,5 partie pour cent à 1,5 partie pour cent.

10. Bandage pneumatique selon l'une quelconque des revendications précédentes, **caractérisé en ce que** le caoutchouc polydiène durci est un caoutchouc styrène-butadiène.
